# FASCICULE DE BREVET EUROPEEN

(11) **EP 0 526 766 B1**
(45) Date de publication et mention de la délivrance du brevet: **21.06.1995**
(21) Numéro de dépôt: 92111848.5
(22) Date de dépôt: 01.08.1992
(51) Int. Cl.: A23F 5/48, A23L 1/22

(54) **Procédé et dispositif d'aromatisation d'une poudre de café soluble**
Verfahren und Vorrichtung zur Aromatisierung eines löslichen Kaffeepulvers
Process and installation for the aromatisation of a soluble coffee powder

(30) Priorité: 07.08.1991 CH 2340/91
(43) Date de publication de la demande: 10.02.1993
(73) Titulaire: SOCIETE DES PRODUITS NESTLE S.A., 1800 Vevey (CH)
(72) Inventeur: Koch, Peter, CH-1350 Orbe (CH)

(56) Documents cités:
- EP-A- 0 041 370
- BE-A- 795 618
- FR-A- 2 271 774
- FR-A- 2 308 406
- FR-A- 2 336 088
- GB-A- 767 322

## Description

La présente invention est relative à un procédé et un dispositif d'aromatisation d'une poudre de café soluble.

La présente invention a plus particulièrement pour objet la réintroduction d'une huile aromatisée dans de la poudre de café soluble pour obtenir un produit à l'arôme renforcé se rapprochant de l'arôme d'un café rôti.

En effet, la poudre de café soluble est classiquement produite par lyophilisation ou atomisation après évaporation d'un extrait de café obtenu par la percolation à contre-courant d'un liquide d'extraction à travers des cellules remplies de café torréfié moulu.

Un des problèmes majeurs de ce type de procédé réside dans le fait que le produit obtenu ne présente pas l'arôme d'un café rôti, ceci étant dû en particulier, d'une part, au procédé d'extraction, et, d'autre part, aux étapes d'évaporation et de lyophilisation ou d'atomisation, qui entraînent inévitablement des pertes d'arômes importantes.

Différentes solutions ont été proposées dans lesquelles une huile, généralement une huile de café, est enrichie en arômes de café puis pulvérisée sur la poudre de café soluble, ou incorporée dans un bocal rempli de café soluble en poudre.

La principale source d'arômes connue et utilisée est constituée par les arômes dégagés par le café rôti moulu.

Un des principaux problèmes à résoudre dans un procédé de ce type est de pouvoir transférer les arômes de café du givre vers l'huile support.

On connaît , par exemple par le document FR 2.336.088, un procédé dans lequel un gaz inerte circule à travers un café rôti moulu. Ce gaz inerte se charge en arômes et un givre est formé par la condensation du dioxyde de carbone entraîné, de l'humidité et des arômes. Ce givre est ensuite, sous des conditions de température et de pression déterminées, mis en contact avec une huile qui récupère ainsi une partie des arômes contenus dans le givre. L'huile obtenue peut ensuite être incorporée à une poudre de café soluble.

Selon le procédé décrit dans ce document, un givre contenant des arômes de café et du dioxyde de carbone est placé dans un récipient dans lequel règne une température supérieure à 0°C et une pression absolue supérieure à 35 bar, l'eau contenue dans le givre est éliminée, une certaine quantité d'huile liquide est ensuite introduite dans le récipient sous pression, les conditions de température et de pression étant telles que l'huile est au-dessus de son point de congélation.

Ensuite, la pression est relâchée lentement en maintenant l'huile à l'état liquide. On obtient ainsi une huile chargée en arômes de café.

Cette huile chargée en arômes peut ensuite être utilisée pour aromatiser une poudre de café soluble, par exemple par pulvérisation de l'huile sur la poudre.

Dans un autre procédé tel que décrit dans EP-A-0509257, cette opération de mise en contact de l'huile avec un givre sert à débarrasser le givre de ces arômes indésirables. Dans une deuxième étape, le résidu liquide obtenu, encore chargé en arômes, est mis en contact avec une deuxième huile qui est l'huile qui sera utilisée pour aromatiser la poudre de café soluble, la première huile étant éliminée.

En tout état de cause, le mode transfert des arômes d'un givre sur une huile décrit dans FR 2 336 088 n'est pas satisfaisant à plusieurs égards puisqu'il n'autorise pas une fabrication en mode continu. En second lieu, les conditions de transfert des arômes du givre vers l'huile ne sont pas maîtrisées. Enfin il nécessite de travailler sous pression élevée.

La demanderesse s'est ainsi posé le problème de pouvoir proposer un transfert d'une fraction aromatique contenue dans le givre vers une substance support adéquate, par exemple une huile, en minimisant les pertes de composés volatils et préférentiellement par un mode opératoire continu, permettant par ailleurs de travailler à pression atmosphérique.

La présente invention a ainsi pour objet un procédé d'aromatisation d'une poudre de café soluble, par incorporation d'une huile enrichie en arômes de café à une poudre de café soluble, comprenant les étapes suivantes :
- un givre est produit par la condensation de dioxyde de carbone chargé en arômes de café et en eau,
- le givre est transporté en continu dans une enceinte à pression atmosphérique contenant une certaine quantité d'huile, renouvelée par adjonction et soutirage d'huile en continu, l'enceinte contenant ainsi un bain d'huile surmonté par un lit de givre,
- le dioxyde de carbone est sublimé et la glace est fondue en formant avec l'huile une émulsion,
- l'émulsion est soutirée, l'huile est séparée de l'eau, et soit l'huile sépareé de l'eau est incorporeé à la poudre de café soluble, soit l'huile sépareé de l'eau est élimineé, l'eau étant mise en contact avec une deuxième huile qui est ensuite incorporeé à la poudre de café soluble.

Grâce a ce procédé, il est possible de maîtriser parfaitement les conditions de transfert des arômes vers l'huile en agissant sur le taux de renouvellement du bain d'huile, et le rapport eau/huile de l'émulsion produite.

La présente invention a aussi pour objet un dispositif pour la mise en oeuvre du procédé ci-dessus comprenant une enceinte munie d'un dispositif d'alimentation en givre, à sa partie supérieure, ainsi qu'un dispositif d'évent du dioxyde de carbone gazeux, un dispositif d'alimentation et de soutirage d'huile situé à sa partie inférieure et un dispositif de régulation de la température de l'huile située dans l'enceinte, et de la vitesse de la sublimation du givre et de la fonte de la glace, un agitateur étant placé dans le bain d'huile, un grillage étant placé à proximité de la surface du bain d'huile, et ledit dispositif régulateur de la température étant constitué soit d'un échangeur de chaleur situé à la zone de contact entre le lit de givre et le bain d'huile, soit d'un premier dispositif situé au-dessus de la surface du bain d'huile et d'un second dispositif situé dans le bain d'huile.

D'autres caractéristiques et avantages ressortiront à la suite de la description qui va suivre, faite en référence aux dessins annexés donnés à titre d'exemple non limitatif et qui représentent chacun une vue schématique en élévation d'un dispositif selon l'invention.

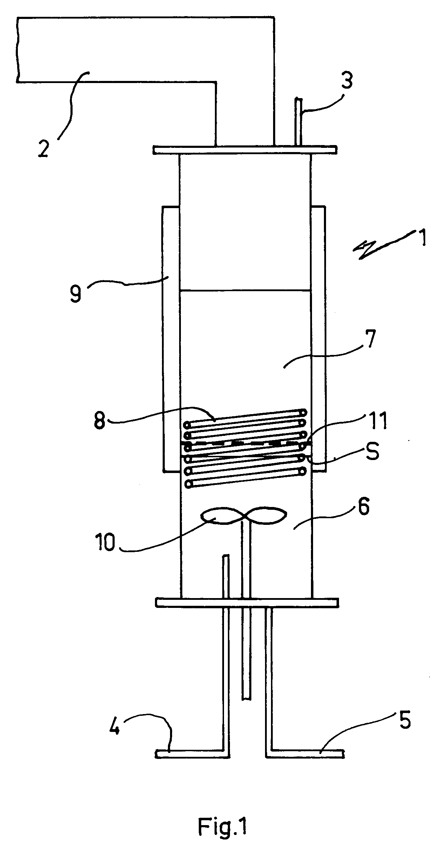

Pour faciliter la compréhension de l'invention il va d'abord être décrit le dispositif de mise en oeuvre illustré à la figure 1.

Ce dispositif est principalement constitué d'une enceinte 1 présentant, à une partie supérieure, un moyen 2 d'alimentation en givre et un évent 3 d'évacuation du dioxyde de carbone gazeux produit par sublimation. Le moyen 2 d'alimentation peut être constitué d'une vis placée dans un fourreau régulé thermiquement.

A une partie inférieure, l'enceinte 1 présente un conduit d'alimentation en huile 4 et un conduit de soutirage 5.

Cette enceinte 1 est destinée à recevoir un bain d'huile 6 et un lit de givre 7, situé à la surface supérieure du bain d'huile 6. Le bain d'huile 6 est limité à sa partie supérieure par une surface S. Un dispositif de régulation thermique est par ailleurs prévu. Ce dispositif de régulation peut être constitué d'un échangeur de chaleur 8 situé à la zone de contact entre le lit de givre 7 et le lit d'huile 6. Cet échangeur 8 peut être placé à l'intérieur de l'enceinte, plongeant dans le bain d'huile et le lit de givre. Il peut alors être constitué d'un serpentin à l'intérieur duquel circule un fluide de chauffage, ou d'une résistance chauffante.

Selon une variante du dispositif selon l'invention décrit à la figure 1, la profondeur de pénétration de l'échangeur 8 dans le bain d'huile 6, en-dessous de la surface S, ainsi que la hauteur de pénétration de cet échangeur 8 dans le lit de givre 7, au-dessus de la surface S, peuvent être réglées par translation verticale de cet échangeur 8 par tout moyen connu ou par variation du niveau d'huile dans l'enceinte 1.

Un manchon 9, d'isolation et de régulation thermique, peut être prévu à la face externe de l'enceinte 1, sur tout ou partie de sa hauteur.

Un agitateur 10 du bain d'huile 6 est donc prévu.

Enfin, à proximité de la surface S du bain d'huile 6, préférablement au dessus, un grillage horizontal 11 est donc disposé qui empêche des glaçons de tomber à l'intérieur du bain d'huile 6.

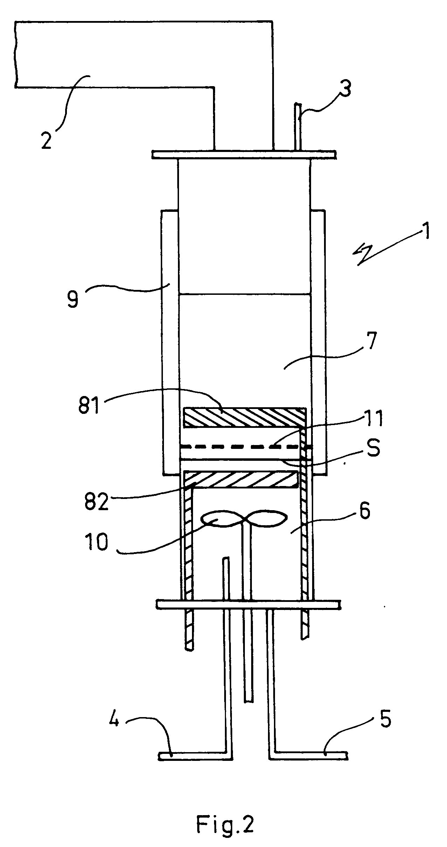

Selon une variante du dispositif selon l'invention décrit à la figure 2, le dispositif de régulation thermique est constitué d'un premier dispositif 81 situé au dessus de la surface S du bain d'huile 6 et d'un second dispositif 82 situé dans le bain d'huile 6, de préférence à mi hauteur de ce dernier. Ainsi, il est possible de régler indépendamment l'apport d'énergie du dispositif de régulation thermique 81 situé dans le lit de givre 7 et la température du dispositif de régulation thermique 82 situé dans le bain d'huile.

Il va maintenant être décrit le procédé selon l'invention.

Un givre, chargé en arômes de café, provenant d'une condensation cryogénique de dioxyde de carbone chargé en arômes de café et en eau est produit selon une technique connue telle que par exemple décrite dans FR 2.336.088.

La fraction aromatique d'un tel givre est très petite, typiquement, 1 kg de givre se compose d'environ 20 g d'arômes , 130 g de glace et 850 g de dioxyde de carbone solide.

Le givre est transporté, par le moyen d'alimentation 2, dans l'enceinte 1 qui contient le bain d'huile 6 renouvelé par adjonction et soutirage d'huile par les conduits 4 et 5. Préférablement, le bain d'huile 6 est maintenu continuellement en mouvement par l'agitateur 10.

L'échangeur de chaleur 8 fournit l'énergie nécessaire, d'une part, au maintien de la température de l'huile au-dessus de sa température de congélation et, d'autre part, à la sublimation du dioxyde de carbone et à la fonte de la glace en eau dans la zone du lit de givre 7 situé au dessus de la surface S du bain d'huile 6.

La température de l'échangeur de chaleur, sa hauteur de pénétration dans le lit de givre 7 au-dessus de la surface S et son niveau d'immersion dans le bain d'huile 6 au-dessous de la surface S peuvent être réglés pour permettre une sublimation du dioxyde de carbone et une fonte de la glace en continu selon les quantités exactes introduites dans l'enceinte 1 par le moyen d'alimentation 2.

On peut par ailleurs, toujours à l'aide de ces réglages, ajuster la hauteur du lit de givre 7 au-dessus du bain d'huile 6.

La glace, qui contient les arômes de café suite à la sublimation du dioxyde de carbone, se concentre à la surface supérieure du bain d'huile 6 où elle fond au contact de l'échangeur de chaleur. L'eau s'écoule ensuite par gravité dans le bain d'huile 6 en formant une émulsion. Les arômes sont transférés dans l'huile en fonction du rapport eau/huile de l'émulsion.

Le dioxyde de carbone sublimé formé remonte à travers le lit de givre 7 ce qui permet de recondenser une partie des arômes qui ont pu être entraînés par le dioxyde de carbone gazeux. En réglant la hauteur du lit de givre 7 il est ainsi possible de réduire au minimum ces pertes aromatiques.

Selon une variante du procédé, une quantité supplémentaire d'arômes entraînés par le dioxyde de carbone gazeux peut être récupérée en lavant ce gaz, à la sortie de l'évent 3, à contre-courant avec de l'huile.

L'émulsion soutirée par le conduit 5 contient ainsi une huile chargée en arômes de café et de l'eau elle même chargée en arômes. L'huile et l'eau peuvent être séparées par tout moyen par exemple par décantation ou centrifugation.

Selon une application principale de l'invention, l'huile obtenue peut ensuite être pulvérisée sur une poudre de café soluble.

Selon une autre application de l'invention, la phase de mise en contact de l'huile et du givre constitue la première étape du procédé décrit dans EP-A-0509257 déjà mentionnée et incorporée dans la description par référence. Dans ce cas, c'est la phase aqueuse de l'émulsion produite qui est conservée pour être mise en contact avec une deuxième huile pour produire alors une huile aromatique qui sera par exemple pulvérisée sur une poudre de café soluble.

Les exemples ci-après illustreront la mise en oeuvre de l'invention. Dans ces exemples les pourcentages sont exprimés par rapport au poids.

### Exemple 1

Différents tests ont été réalisés en faisant varier la teneur en eau d'une émulsion afin de déterminer la quantité d'arômes présents dans l'huile et dans l'eau. Ces résultats illustrent donc l'influence du rapport eau/huile sur le transfert des arômes de l'eau vers l'huile et sont résumés dans le tableau ci-dessous dans lequel C1 et C2 représentent respectivement la concentration de l'eau et de l'huile en arômes. De même Q1 et Q2 représentent respectivement les quantités d'arômes contenues dans l'eau et dans l'huile.

| Quantité d'eau dans l'émulsion (%) | C1/C2 | Q1/Q2 |
|---|---|---|
| 0,5 | 17,4 | 0,09 |
| 2 | 6,4 | 0,13 |
| 2,6 | 5,4 | 0,14 |
| 9,4 | 3,2 | 0,33 |
| 14,5 | 2,5 | 0,42 |
| 35 | 2,1 | 1,13 |
| 52 | 1,8 | 1,95 |
| 67 | 1,4 | 2,28 |
| 83 | 1,3 | 6,35 |

On voit ainsi clairement que plus la quantité d'eau présente dans l'émulsion est élevée plus la quantité d'arômes transférés dans l'huile est faible. Il est ainsi possible, en utilisant des émulsions riches en eau, de ne transférer qu'une faible partie des arômes vers l'huile qui sera par ailleurs très concentrée. Il se trouve par ailleurs que, dans ce cas, ce sont les arômes les moins stables et les moins agréables qui sont transférés. Il est ainsi possible d'obtenir, par exemple par centrifugation, une eau encore chargée en arômes n'ayant perdu que ses arômes les moins agréables et qui sera mise en contact avec une deuxième huile qui sera l'huile utilisée pour aromatiser la poudre de café soluble.

### Exemple 2

1034 g/h de givre ont été introduits dans l'enceinte à partir de 300 kg/h de café rôti. Ce givre comprenait 85,5% de dioxyde de carbone, 12,6% de glace et 1,9% d'arômes. Le débit d'arômes introduits dans l'enceinte était donc de 19,6 g/h.

Il a été formé un lit de givre d'une hauteur de 17 cm, la température du givre pendant la sublimation était de -78,5 °C et le temps moyen de séjour était de 54 minutes.

Le bain d'huile (constitué en fait d'une émulsion d'huile et d'eau) était d'un volume de 0,8 litre, à une température de 30°c, avec un temps de séjour moyen de l'huile de 34 minutes, le débit d'alimentation d'huile étant de 1,275 kg/h.

L'émulsion huile-eau a été soutirée à un débit de 1,424 kg/h avec un débit d'arômes de 19 g/h. La teneur en eau de l'émulsion était de 9,1%.

Ainsi, grâce au procédé selon l'invention, 95 % des arômes contenus dans le givre se sont retrouvés dans l'émulsion.

### Exemple 3

Un givre identique à celui de l'exemple 1 a été introduit dans les mêmes conditions dans l'enceinte.

Il a été formé un lit de givre d'une hauteur de 4 cm, la température du givre pendant la sublimation était de -78,5 °C et le temps moyen de séjour était de 13 minutes.

Le bain d'huile (constitué d'une émulsion d'huile et d'eau) était d'un volume de 0,8 litre, à une température de 30°c, avec un temps de séjour moyen de l'huile de 34 minutes, le débit d'alimentation d'huile étant de 1,275 kg/h.

L'émulsion huile-eau a été soutirée à un débit de 1,423 kg/h avec un débit d'arômes de 17,6 g/h. La teneur en eau de l'émulsion était de 9,1%.

Ainsi, grâce au procédé selon l'invention, 89 % des arômes contenus dans le givre se sont retrouvés dans l'émulsion.

Cet exemple illustre l'influence du temps de séjour du givre et de la hauteur du lit de givre sur la récupération des arômes.

### Exemple 4

1299 g/h de givre ont été introduits dans l'enceinte à partir de 300 kg/h de café rôti. Ce givre comprenait 90,8% de dioxyde de carbone, 7,7% de glace et 1,5% d'arômes. Le débit d'arômes introduits dans l'enceinte était donc de 19,5 g/h.

Il a été formé un lit de givre d'une hauteur de 8 cm, la température du givre pendant la sublimation était de -78,5 °C et le temps moyen de séjour était de 20 minutes.

Le bain d'huile(constitué d'une émulsion d'huile et d'eau) était d'un volume de 0,8 litre, à une température de 30°c, avec un temps de séjour moyen de l'huile de 34 minutes, le débit d'alimentation d'huile étant de 1,275 kg/h.

L'émulsion huile-eau a été soutirée à un débit de 1,393 kg/h avec un débit d'arômes de 18 g/h. La teneur en eau de l'émulsion était de 7,2%.

Ainsi, grâce au procédé selon l'invention, plus de 90% des arômes contenus dans le givre se sont retrouvés dans l'émulsion.

La comparaison des exemples 2,3 et 4 montre bien l'influence de la hauteur du lit de givre sur la récupération des arômes.

### Exemple 5

1963 g/h de givre ont été introduits dans l'enceinte à partir de 300 kg/h de café rôti. Ce givre comprenait 88,3% de dioxyde de carbone, 10,2% de glace et 1,5% d'arômes. Le débit d'arômes introduits dans l'enceinte était donc de 29,5 g/h.

Il a été formé un lit de givre d'une hauteur de 12 cm, la température du givre pendant la sublimation était de -78,5 °C et le temps moyen de séjour était de 20 minutes.

Le bain d'huile (constitué d'une émulsion d'huile et d'eau) était d'un volume de 0,8 litre, à une température de 30°c, avec un temps de séjour moyen de l'huile de 26 minutes, le débit d'alimentation d'huile étant de 1,620 kg/h.

L'émulsion huile-eau a été soutirée à un débit de 1,848 kg/h avec un débit d'arômes de 28 g/h. La teneur en eau de l'émulsion était de 10,8%.

Ainsi, grâce au procédé selon l'invention, près de 95% des arômes contenus dans le givre se sont retrouvés dans l'émulsion.

On remarquera enfin que, dans les exemples 2, 3, 4 et 5, les quantités mises en oeuvre peuvent apparaître comme relativement faibles. Plus particulièrement, le volume du bain constitué par l'huile et l'eau est inférieur à 1 litre. Il s'agit pourtant là de quantités correspondant à une utilisation industrielle. En effet, dans l'hypothèse où l'huile séparée de l'eau est utilisée pour aromatiser une poudre de café soluble, il faut garder à l'esprit que la quantité d'huile pulvérisée sur la poudre représente moins de 1% de la masse de la poudre, typiquement moins de 0,5%.

Si on prend comme référence une ligne de fabrication produisant 1000 kg/h de poudre de café soluble à partir de 2500 kg/h de café rôti, si on désire un taux d'huile sur la poudre de 0,25%, il en résulte un débit d'huile aromatisée de 2,5 kg/h.

On voit donc que l'invention permet très simplement, et avec un dispositif très petit, de fournir, en continu, la quantité d'huile aromatisée nécessaire à une ligne industrielle.

## Revendications

1. Procédé d'aromatisation d'une poudre de café soluble, par incorporation d'une huile enrichie en arômes de café à une poudre de café soluble, comprenant les étapes suivantes :
- un givre est produit par la condensation de dioxyde de carbone chargé en arômes de café et en eau,
- le givre est transporté en continu dans une enceinte à pression atmosphérique contenant une certaine quantité d'huile, renouvelée par adjonction et soutirage d'huile en continu, l'enceinte contenant ainsi un bain d'huile surmonté par un lit de givre,
- le dioxyde de carbone est sublimé et la glace est fondue en formant avec l'huile une émulsion,
- l'émulsion est soutirée, l'huile est séparée de l'eau, et soit l'huile sépareé de l'eau est incorporée à la poudre de café soluble, soit l'huile séparée de l'eau est éliminée, l'eau étant mise en contact avec une deuxième huile qui est ensuite incorporée à la poudre de café soluble.

2. Procédé selon la revendication 1 dans lequel l'huile située dans l'enceinte est maintenue continuellement en mouvement.

3. Procédé selon la revendication 1 dans lequel on régule la quantité de glace fondue et de dioxyde de carbone sublimé en fonction de la quantité de givre introduite dans l'enceinte.

4. Procédé selon la revendication 1 dans lequel on régule le débit d'huile dans l'enceinte en fonction de la quantité de glace fondue par unité de temps.

5. Dispositif pour la mise en oeuvre du procédé selon l'une des revendications précédentes comprenant une enceinte (1) munie d'un dispositif d'alimentation (2) en givre, à sa partie supérieure, ainsi qu'un dispositif d'évent (3) du dioxyde de carbone gazeux, un dispositif d'alimentation (4) et de soutirage (5) d'huile situé à sa partie inférieure et un dispositif de régulation (8, 81, 82) de la température du bain d'huile (6) et de la vitesse de sublimation du givre et de la fonte de la glace, un agitateur (10) étant placé dans le bain d'huile (6), un grillage (11) étant placé à proximité de la surface supérieure (S) du bain d'huile (6), et ledit dispositif de régulation de la température étant constitué soit d'un échangeur de chaleur (8) situé à la zone de contact entre le lit de givre (7) et le bain d'huile (6), soit d'un premier dispositif (81) situé au-dessus de la surface (S) du bain d'huile (6) et d'un second dispositif (82) situé dans le bain d'huile (6).

## Claims

1. A process for flavouring a soluble coffee powder by incorporation of an oil enriched with coffee aromas in a soluble coffee powder, comprising the following steps:
- a frost is produced by the condensation of carbon dioxide charged with coffee aromas and with water,
- the frost is continuously transported into an enclosure at atmospheric pressure containing a certain quantity of oil renewed by continuous addition and removal of oil, the enclosure thus containing an oil bath surmounted by a bed of frost,
- the carbon dioxide is sublimated and the ice is melted, forming an emulsion with the oil,
- the emulsion is removed, the oil is separated from the water and either the oil separated from the water is incorporated in the soluble coffee powder or the oil separated from the water is eliminated, the water being contacted with a second oil which is then incorporated in the soluble coffee powder.

2. A process as claimed in claim 1, in which the oil in the enclosure is continuously stirred.

3. A process as claimed in claim 1, in which the quantity of melted ice and sublimated carbon dioxide is regulated according to the quantity of frost introduced into the enclosure.

4. A process as claimed in claim 1, in which the input of oil into the enclosure is regulated according to the quantity of ice melted per unit of time.

5. An apparatus for carrying out the process claimed in any of the preceding claims, comprising an enclosure (1) equipped in its upper part with means (2) for supplying frost, a vent (3) for gaseous carbon dioxide, means (4,5) for supplying and removing oil arranged in its lower part and means (8,81,82) for controlling the temperature of the oil bath (6), the rate of sublimation of the frost and melting of the ice, a stirrer (10) being arranged in the oil bath (6), a grill (11) being arranged near the upper surface (S) of the oil bath (6) and the temperature control means being formed either by a heat exchanger (8) arranged in the contact zone between the layer (7) of frost and the oil bath (6) or by a first means (81) positioned above the surface (S) of the oil bath (6) and a second means (82) positioned in the oil bath (6).

## Patentansprüche

1. Verfahren zum Aromatisieren eines Pulvers aus löslichem Kaffee durch Beimengen eines mit Kaffeearomen angereicherten Öles zu einem Pulver aus löslichem Kaffee, mit den folgenden Schritten:
- es wird ein Schnee hergestellt durch Kondensation von Kohlendioxid, das mit Kaffeearomen und Wasser beladen ist,
- der Schnee wird kontinuierlich in ein Gefäß befördert, das sich auf atmosphärischem Druck befindet und eine bestimmte Menge Öl enthalt, welche durch kontinuierliche Zugabe und Entnahme von Öl erneuert wird, wodurch das Gefäß ein Ölbad enthält, über dem sich ein Bett aus Schnee befindet,
- das Kohlendioxid wird sublimiert und das Eis geschmolzen, wobei eine Emulsion mit dem Öl gebildet wird,
- die Emulsion wird entnommen, das Öl vom Wasser getrennt, und entweder wird das vom Wasser getrennte Öl dem Pulver aus löslichem Kaffee beigemengt, oder das vom Wasser getrennte Öl wird beseitigt und das Wasser mit einem zweiten Öl in Kontakt gebracht, welches anschließend dem Pulver aus löslichem Kaffee beigemengt wird.

2. Verfahren nach Anspruch 1, bei welchem das im Gefäß vorliegende Öl kontinuierlich in Bewegung gehalten wird.

3. Verfahren nach Anspruch 1, bei welchem die Menge an geschmolzenem Eis und an sublimiertem Kohlendioxid abhängig von der Menge an in das Gefäß eingebrachtem Schnee geregelt wird.

4. Verfahren nach Anspruch 1, bei welchem die Zugabe an Öl zum Gefäß abhängig von der Menge an pro Zeiteinheit geschmolzenem Eis geregelt wird.

5. Vorrichtung zur Durchführung des Verfahrens nach einem der vorhergehenden Ansprüche, mit einem Gefäß (1), das mit einer Zuführeinrichtung (2) für Schnee in seinem oberen Teil sowie mit einer Anzugeinrichtung (3) für gasförmiges Kohlendioxid versehen ist, mit einer Zuführ- (4) und Entnahmeeinrichtung (5) für Öl, die in seinem unteren Teil liegt, und mit einer Regeleinrichtung (8, 81, 82) für die Temperatur des Ölbades (6) und für die Geschwindigkeit der Sublimation des Schnees und des Schmelzens des Eises, wobei in dem Ölbad (6) ein Rührer (10) angeordnet ist, ein Gitter (11) in der Nähe der Oberfläche (S) des Ölbades (6) angeordnet ist, und wobei die Einrichtung zur Regelung der Temperatur entweder durch einen Wärmetauscher (8), der im Bereich des Kontaktes zwischen Schneebett (7) und Ölbad (6) liegt, oder durch eine erste Einrichtung (81), die oberhalb der Oberfläche (S) des Ölbades (6) liegt und eine zweite Einrichtung (82), die im Ölbad (6) liegt, gebildet ist.
